(19) Europäisches Patentamt
European Patent Office
Office européen des brevets

(11) EP 3 789 750 B1

(12) FASCICULE DE BREVET EUROPEEN

(45) Date de publication et mention de la délivrance du brevet:
**07.06.2023 Bulletin 2023/23**

(21) Numéro de dépôt: **20191213.6**

(22) Date de dépôt: **14.08.2020**

(51) Classification Internationale des Brevets (IPC):
**G01N 15/02** *(2006.01)* **G01N 21/47** *(2006.01)*
**G01N 15/00** *(2006.01)*

(52) Classification Coopérative des Brevets (CPC):
**G01N 15/0211;** G01N 2015/0038;
G01N 2015/0222; G01N 2015/0294;
G01N 2021/4792

(54) **DISPOSITIF ET PROCÉDÉ DE DÉTERMINATION DE PARAMÈTRES CARACTÉRISTIQUES DES DIMENSIONS DE NANOPARTICULES**

VORRICHTUNG UND VERFAHREN ZUR BESTIMMUNG DER CHARAKTERISTISCHEN PARAMETER DER ABMESSUNGEN VON NANOTEILCHEN

DEVICE AND METHOD FOR DETERMINING CHARACTERISTIC PARAMETERS OF THE DIMENSIONS OF NANOPARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **03.09.2019 FR 1909692**

(43) Date de publication de la demande:
**10.03.2021 Bulletin 2021/10**

(73) Titulaires:
• **Cordouan Technologies**
  **33600 Pessac (FR)**
• **Centre National de la Recherche Scientifique**
  **75016 Paris (FR)**
• **UNIVERSITE DE BORDEAUX**
  **33000 Bordeaux (FR)**
• **Institut Polytechnique de Bordeaux**
  **33402 Talence Cedex (FR)**

(72) Inventeurs:
• **Aubrit, Florian**
  **79400 Nanteuil (FR)**
• **Jacob, David**
  **33400 Talence (FR)**
• **Sandre, Olivier**
  **33600 Pessac (FR)**

(74) Mandataire: **Osha Liang**
  **2, rue de la Paix**
  **75002 Paris (FR)**

(56) Documents cités:
**WO-A1-00/14510    US-B1- 8 854 621**

• **LEVIN ALEXANDER D ET AL: "Nonspherical nanoparticles characterization by partially depolarized dynamic light scattering", PROCEEDINGS OF SPIE/ IS & T,, vol. 9526, 21 juin 2015 (2015-06-21), pages 95260P-95260P, XP060055681, DOI: 10.1117/12.2184867 ISBN: 978-1-62841-730-2**
• **PITTER M C ET AL: "STRUCTURE OF POLARIZATION FLUCTUATIONS AND THEIR RELATION TO PARTICLE SHAPE", JOURNAL OF QUANTITATIVE SPECTROSCOPY AND RADIATIVE TRANSFER, ELSEVIER SCIENCE, OXFORD, GB, vol. 63, no. 2/06, 1 septembre 1999 (1999-09-01), pages 433-444, XP000863411, ISSN: 0022-4073, DOI: 10.1016/S0022-4073(99)00029-1**

## Description

La présente invention concerne un dispositif et un procédé de détermination de paramètres caractéristiques des dimensions de nanoparticules par diffusion de la lumière, et concerne plus particulièrement la caractérisation de nanoparticules anisotropes en suspension dans un liquide.

## Etat de la technique

L'emploi de nanoparticules s'est généralisé dans les processus industriels, que ce soit dans l'industrie pharmaceutique, l'industrie cosmétique, l'industrie des matériaux, ou l'industrie de l'électronique. Les propriétés des nanoparticules sont directement liées à leur structure (taille, morphologie, composition), d'où le besoin de former des nanoparticules de plus en plus complexes afin d'exploiter au mieux leur potentiel. Notamment, les nanoparticules anisotropes (par exemple des nanoparticules allongées de type « nano-bâtonnets ») font l'objet d'une étude croissante. Il s'agit par exemple de certaines structures de « *quantum dots* » (nanoparticules luminescentes, très utilisées dans le domaine de l'audio-visuel), de dérivées de la biomasse (notamment la cellulose), valorisés dans le contexte écologique, ou encore diverses nano-capsules fabriquées pour le transport de médicaments dans le corps humain et pouvant adopter des morphologies tubulaires dans certaines conditions de pH et de température.

Il est donc nécessaire de développer de nouvelles techniques permettant une caractérisation rapide et précise de ces structures.

La diffusion dynamique de la lumière (ou DLS pour « *Dynamic Light Scattering* ») fait partie des techniques-phares pour l'étude des nanoparticules, permettant d'obtenir rapidement une valeur de taille de nanoparticules ainsi qu'une information sur la polydispersité (i.e. classes de populations de nanoparticules d'une plage de taille donnée).

Cependant, la technique de DLS généralement utilisée, consistant à étudier la diffusion de la lumière à un angle donné, permet seulement de caractériser des nanoparticules sphériques ou, éventuellement, d'obtenir une information grossière de la dimension principale « hydrodynamique » de nano-objets non sphériques (c'est-à-dire le diamètre d'une sphère équivalente présentant une constante de diffusion translationnelle identique).

Le brevet US8,854,621 [Réf. 1] s'intéresse plus spécifiquement à la caractérisation de nanoparticules anisotropes. Pour cela, Réf. 1 décrit une méthode de détermination de taux de relaxation de la lumière diffusée (taux de relaxation « *translationnelle* » et « *rotationnelle* ») lorsque l'échantillon formé des nanoparticules en suspension dans un liquide est illuminé par un faisceau de lumière polarisée. Plus précisément, la lumière diffusée est collectée à 90° du faisceau d'illumination incident, à travers un prisme polariseur (analyseur) tournant de type Glan-Thompson. Le prisme tournant de Glan-Thompson permet de sélectionner une polarisation selon un axe parallèle à la polarisation incidente (analyse de la lumière diffusée dite « *polarisée VV* » avec V pour « Vertical »)) ou selon un axe perpendiculaire (analyse de la lumière diffusée dite « *dépolarisée VH* » avec H pour « Horizontal »). Les taux de relaxation translationnelle et rotationnelle sont déterminés à partir d'une procédure d'ajustement de la décroissance (multi)exponentielle des fonctions d'autocorrélation des intensités lumineuses diffusées VV et VH, respectivement. Il est possible à partir de ces taux de relaxation de déterminer un paramètre caractéristique des dimensions des nanoparticules anisotropes, comme par exemple un rapport de forme (défini comme le rapport entre la longueur et la largeur de l'objet). Cette méthode est également décrite dans J. Rodriguez-Fernàndez *et al.* [Réf. 2]. Dans A. D. Levin et al. [Réf. 3], une technique améliorée est proposée, basée sur l'utilisation de lumière dépolarisée entre l'état VV et l'état VH. Réf. 3 décrit un dispositif de détermination de paramètres caractéristiques des dimensions de nanoparticules en suspension. Il est donc considéré comme l'état de l'art le plus proche et décrit plus précisément un dispositif et une méthode pour la caractérisation de nanoparticules non-sphériques utilisant une méthode de diffusion dynamique de la lumière partiellement dépolarisée.

Un objectif de la présente description est de proposer un montage et un procédé amélioré permettant par rapport à l'état de l'art décrit ci-dessus de gagner en précision et en rapidité de mesure.

## Résumé de l'invention

Selon un premier aspect, la présente description concerne un dispositif de détermination de paramètres caractéristiques des dimensions de nanoparticules en suspension dans un milieu liquide, comprenant :

- Des moyens d'émission lumineuse configurés pour émettre un faisceau incident polarisé linéairement selon un axe de polarisation ;
- une unité de détection comprenant un bras de mesure mobile en rotation autour d'un axe de rotation, ladite unité de détection étant configurée pour la détection d'une pluralité de faisceaux diffusés par l'échantillon selon une pluralité d'angles de diffusion, lorsque l'échantillon est illuminé par le faisceau incident, et comprenant une première voie de détection avec un premier axe optique et une deuxième voie de détection avec un deuxième axe optique, les première et deuxième voies de détection étant séparées par un élément séparateur de polarisation agencé sur ledit bras de mesure;
- un support d'échantillon fixe, configuré pour recevoir un contenant à symétrie cylindrique, transparent, à l'intérieur duquel se trouve un échantillon desdites nanoparticules en suspension, le support d'échantillon étant agencé de telle sorte qu'en opération, un axe de symétrie du contenant soit confondu avec l'axe de rotation du bras de mesure ;
- une unité de contrôle.

Selon la présente description, l'élément séparateur de polarisation du bras de mesure est configuré pour envoyer simultanément, pour chaque angle de diffusion de ladite pluralité d'angles de diffusion :

- sur la première voie de détection, une première composante polarisée du faisceau diffusé audit angle de diffusion, ladite première composante étant polarisée linéairement avec un axe de polarisation colinéaire avec ledit axe de polarisation du faisceau incident.
- sur la deuxième voie de détection, une deuxième composante polarisée du faisceau diffusé audit angle de diffusion, ladite deuxième composante étant polarisée linéairement avec un axe de polarisation perpendiculaire à l'axe de polarisation du faisceau incident.

Par ailleurs, l'unité de contrôle est configurée pour déterminer, à partir de signaux résultant des composantes polarisées détectés sur chacune des voies de détection en fonction du temps, et pour la pluralité des angles de diffusion, au moins deux paramètres caractéristiques des dimensions des nanoparticules.

Dans la présente description, on définit l'angle de diffusion comme l'angle formé dans un plan normal à l'axe de symétrie du contenant, entre la direction de propagation du faisceau incident et la direction dudit premier axe optique de ladite première voie de détection.

Dans la présente description, les nanoparticules sont définies comme des nano-objets dont la moitié, pris sur un groupe de 100 nano-objets, présentent au moins une dimension inférieure à 100 nm.

Les nanoparticules peuvent comprendre des oxydes métalliques, des métaux, des semi-métaux, des terres inorganiques, des polymères, des nano-objets carbonés ou organiques, fonctionnalisés par des molécules actives, des cristaux, des assemblages moléculaires, des autoassemblages de tensioactifs (micelles sphériques, cylindriques, discoïdes,...) ou de polymères (micelles polymères), des vésicules, des virus biologiques, des bactéries, des macromolécules biologiques (e.g. protéines), des quantum dots, des nanotubes organiques ou inorganiques, des nano-plaquettes d'argiles, des nano-feuillets (par exemple du graphène ou de l'oxyde de graphène), des nano gouttes de microémulsion ou nano-émulsion (par exemple huile dans eau ou eau dans huile), des chaînes de nanocristaux alignés entre eux, etc.

Les nanoparticules dispersées dans un milieu liquide peuvent former des suspensions colloïdales lorsque la dispersion est stable thermodynamiquement ou au moins métastable.

Selon un ou plusieurs exemples de réalisation, les paramètres caractéristiques des dimensions des nanoparticules comprennent au moins deux paramètres parmi : une longueur, une largeur, un rapport de forme, un diamètre (cas de nanoparticules discoïdales, sphériques ou cylindriques), une hauteur (cas de nanoparticules de forme prismatique, par exemple avec une base triangulaire), une épaisseur (dans le cas d'une plaquette), une longueur de grand axe et/ ou de petit axe (cas d'une nanoparticule de forme ellipsoïdale).

Les déposants ont montré que le dispositif ainsi décrit, du fait de la combinaison des caractéristiques structurelles, permet, par rapport aux dispositifs connus de l'état de l'art, une mesure simultanée des deux composantes polarisées dites VV et VH du faisceau diffusé par une même région de l'échantillon, ce qui permet un gain de précision et de rapidité.

Par ailleurs, le gain de temps procuré par la mesure simultanée des deux composantes polarisées offre la possibilité d'une mesure cinétique de la croissance de nanoparticules anisotropes en travaillant à angle de diffusion donné.

Par ailleurs, la mesure multi-angles ainsi réalisée permet un gain de précision et un affranchissement des possibles artefacts de mesure.

Selon un ou plusieurs exemples de réalisation, la pluralité d'angles de diffusion est comprise dans une plage d'angles de diffusion allant de 20° à 160°.

Selon un ou plusieurs exemples de réalisation, un pas d'incrément entre les angles de ladite pluralité d'angles de diffusion est compris entre 5° et 45°.

Les déposants ont montré que la gamme d'angles étudiée (20°-160°) permet d'améliorer la précision de la mesure en s'affranchissant de certains artefacts nuisibles à la mesure.

Le pas d'incrément, entre 5° et 45°, est choisi par un compromis entre la rapidité de la mesure (temps de mesure) et la précision souhaitée (nombre de points de mesure). Selon un ou plusieurs exemples de réalisation, ledit bras de mesure est automatisé en rotation, contrôlé par ladite unité de contrôle, limitant ainsi les manipulations manuelles possiblement sources d'imprécisions. Par exemple, le bras de mesure est automatisé en rotation au moyen d'un moteur pas à pas.

Selon un ou plusieurs exemples de réalisation, chacune des première et deuxième voies de détection comprend un détecteur, le détecteur pouvant être par exemple, et de façon non limitative : une photodiode à avalanche (APD) ou un tube photomultiplicateur (PMT).

Selon un ou plusieurs exemples de réalisation, lesdites première et deuxième voies de détection sont fibrées. Cela permet de déporter les détecteurs en dehors du bras de mesure mobile en rotation et de ce fait, de garder un dispositif compact et robuste, les détecteurs étant fixes et déportés ailleurs, avec l'unité de contrôle.

Selon un ou plusieurs exemples de réalisation, chaque voie de détection comprend ainsi une fibre optique monomode à la longueur d'onde de la source lumineuse, connectée à un collimateur optique de collecte, ledit collimateur définissant l'axe optique de la voie de détection.

Selon un ou plusieurs exemples de réalisation, les axes optiques des voies de détection présentent un angle compris entre 10° et 90° ; par exemple, les premier et deuxième axes optiques sont perpendiculaire.

Selon un ou plusieurs exemples de réalisation, les moyens d'émission lumineuse comprennent une source laser, par exemple une diode émettrice de lumière laser, un laser à l'état solide ou un laser à gaz. Une source laser présente en effet une cohérence spatiale et temporelle et une puissance optique suffisante pour des mesures de diffusion de la lumière précises.

La source laser est par exemple continue, polarisée linéairement, de préférence fibrée avec un élément de focalisation (collimateur) et, le cas échéant, un polariseur externe pour améliorer le rapport signal à bruit (contraste exprimé en décibels).

Selon un ou plusieurs exemples de réalisation, l'élément séparateur de polarisation comprend un prisme ou un biprisme de type Glan-Thomson, Glan-Taylor, ou Wollaston.

Selon un ou plusieurs exemples de réalisation, le support d'échantillon est en outre conducteur de chaleur et comprend un élément de contrôle de température pour le maintien à température contrôlée de l'échantillon. Par exemple, l'élément de contrôle de température comprend un élément Peltier ou une chambre thermostatée, par exemple une chambre de circulation reliée à un bain thermostaté.

Selon un ou plusieurs exemples de réalisation, le support d'échantillon est configuré pour recevoir une pluralité de contenants à symétrie cylindrique, de tailles et/ou volumes différents. Il est ainsi possible d'éviter les transvasements inutiles, voire néfastes de l'échantillon.

La description concerne, selon un deuxième aspect, des procédés mis en oeuvre au moyen d'exemples de dispositifs selon le premier aspect.

Ainsi, selon un deuxième aspect, la description concerne un procédé de détermination de paramètres caractéristiques des dimensions de nanoparticules en suspension dans un milieu liquide, comprenant :

- l'agencement d'un échantillon desdites nanoparticules en suspension liquide dans un contenant à symétrie cylindrique, transparent ;
- l'illumination dudit échantillon au moyen d'un faisceau lumineux incident polarisé linéairement selon un axe de polarisation;
- la détection simultanée, au moyen d'un bras de mesure mobile en rotation autour d'un axe de rotation confondu avec un axe de symétrie du contenant, pour chaque angle de diffusion d'une pluralité d'angles de diffusion, de deux composantes polarisées du faisceau diffusé par l'échantillon audit angle de diffusion, les deux composantes polarisées présentant respectivement deux axes de polarisation perpendiculaires, un desdits axes étant colinéaire avec ledit axe de polarisation du faisceau incident ;
- la détermination, à partir de signaux correspondant aux composantes polarisées détectées en fonction du temps pour la pluralité des angles de diffusion, d'au moins deux paramètres caractéristiques des dimensions des nanoparticules.

Selon un ou plusieurs exemples de réalisation, les paramètres caractéristiques des dimensions des nanoparticules comprennent au moins deux paramètres parmi : une longueur, une largeur, un rapport de forme, un diamètre (cas de nanoparticules discoïdales, sphériques ou cylindrique), une hauteur (cas de nanoparticules de forme prismatique, par exemple avec une base triangulaire), une épaisseur (cas d'une plaquette), une longueur de grand axe et/ ou de petit axe (cas d'une nanoparticule de forme ellipsoïdale).

Selon un ou plusieurs exemples de réalisation, lesdits signaux correspondent à des composantes polarisées détectées pendant une durée de mesure déterminée, par exemple une durée comprise entre 5 s et 1 min.

Selon un ou plusieurs exemples de réalisation, la pluralité d'angles de diffusion est comprise dans une plage d'angles de diffusion allant de 20° à 160°.

Selon un ou plusieurs exemples de réalisation, le pas d'incrément de la pluralité d'angles de diffusion est compris entre 5° et 45°.

Selon un ou plusieurs exemples de réalisation, la détermination d'au moins deux paramètres caractéristiques des dimensions des nano-objets comprend la détermination de deux coefficients de diffusion translationnelle et rotationnelle. Selon un ou plusieurs exemples de réalisation, la détermination des deux coefficients de diffusion translationnelle et rotationnelle comprend, pour chaque angle de diffusion, la détermination de deux taux de relaxation translationnelle et rotationnelle.

Selon un ou plusieurs exemples de réalisation, la détermination des deux taux de relaxation translationnelle et rotationnelle pour ledit angle de diffusion, comprend :

- la détermination de deux corrélogrammes correspondant aux fluctuations d'intensité desdites deux composantes polarisées en fonction du temps;
- la détermination, à partir desdits corrélogrammes, desdits taux de relaxation translationnelle et rotationnelle.

Selon un ou plusieurs exemples de réalisation, la détermination des deux taux de relaxation translationnelle et rotationnelle est obtenue à partir d'un ajustement de courbes résultant respectivement de la somme et de la soustraction des deux corrélogrammes. Cela permet de mettre en exergue respectivement, l'un (la somme des corrélogrammes) la somme des taux de relaxation et l'autre (la soustraction) le taux de relaxation translationnelle seul.

Pour la détermination de deux taux de relaxation translationnelle et rotationnelle, il est également possible d'utiliser de façon connue la largeur de pics sur des spectres obtenus par des FFT (Transformées de Fourier rapides) des deux composantes polarisées en fonction du temps [Réf. 4].

Selon un ou plusieurs exemples de réalisation, la détermination des coefficients de diffusion translationnelle et rotationnelle est obtenue pour chaque angle de diffusion de la pluralité d'angles de diffusion.

Selon un ou plusieurs exemples de réalisation, la détermination des coefficients de diffusion translationnelle et rotationnelle est obtenue de façon graphique à partir d'une pluralité des taux de relaxation translationnelle et rotationnelle déterminés pour une pluralité d'angles de diffusion.

Selon un ou plusieurs exemples de réalisation, la détermination desdits au moins deux paramètres caractéristiques des dimensions des nanoparticules comprend la détermination d'une longueur et d'un rapport de forme desdites nanoparticules calculés par une loi empirique d'inversion à partir des formules théoriques desdits coefficients de diffusion translationnelle et rotationnelle.

Selon un ou plusieurs exemples de réalisation, ladite loi empirique est fonction du ratio du coefficient de diffusion translationnelle par la racine cubique du coefficient de diffusion rotationnelle.

Les déposants ont ainsi démontré que notamment dans le cas de nanoparticules de symétrie cylindrique, le changement de variables ci-dessus permettait une détermination directe desdits longueur et rapport de forme.

Plus précisément, le changement de variables comprend la détermination de X, Y, avec $X=D_t/(\sqrt[3]{D_r})$, où $D_t$ est le coefficient de diffusion translationnelle et $D_r$ est le coefficient de diffusion rotationnelle, et Y est défini comme le ratio de la température absolue (en Kelvin) par la viscosité dynamique du liquide porteur de la suspension (exprimée en millipascal par seconde ou centipoise).

Ainsi, dans le cas de nanoparticules cylindriques, la longueur (L) et le rapport de forme (RF=L/Φ où Φ est le diamètre) peuvent être calculés à partir des formules empiriques suivantes qui ont été déterminées numériquement par calcul à partir des formules théoriques (équations du modèle de Broersma, citées dans [réf 1] et [réf 2]) par minimisation par la méthode des moindres carrés pour des longueurs L comprises entre 2 nm et 2 μm et pour des rapports de forme RF entre 2 et 20 :

[Math 1]

$$L = ( a \times Y^{4/3} ) / (b \times Y - c \times Y^{1/3} \times X ) / D_r^{1/3}$$

$$RF = L/\Phi = e \times \exp ( f \times Y^{-2/3} \times X )$$

où X est le ratio du coefficient de diffusion translationnelle par la racine cubique du coefficient de diffusion rotationnelle et Y est le ratio de la température absolue (en Kelvin) par la viscosité du liquide porteur (en millipascal par seconde ou en centipoise), *exp* est la fonction mathématique usuelle et a, b, c, e et f sont des constantes indépendantes de l'échantillon et des conditions expérimentales (e.g. la température) dont les valeurs sont les suivantes :

[Math 2]

$$a = 1.29714 \times 10^{-32}$$
$$b = 1.33796 \times 10^{-24}$$
$$c = 6.69743 \times 10^{-9}$$
$$e = 3.35889 \times 10^{-2}$$
$$f = 4.12937 \times 10^{16}$$

**Brève description des figures**

D'autres avantages et caractéristiques de l'invention apparaîtront à la lecture de la description, illustrée par les figures suivantes :

[Fig. 1] représente un schéma d'un dispositif de déterminations de paramètres caractéristiques des dimensions de nanoparticules, selon un exemple de réalisation ;
[Fig. 2A] représente un schéma synoptique d'un exemple de procédé de détermination de paramètres caractéristiques des dimensions de nanoparticules, selon un exemple de réalisation ;
[Fig. 2B] représente un schéma synoptique d'une étape d'un procédé tel que décrit sur la Fig. 2A, selon un exemple de réalisation ;
[Fig. 3A] représente un schéma expérimental illustrant 4 corrélogrammes d'une composante polarisée VV d'un faisceau diffusé par un échantillon de nano-bâtonnets d'or en suspension dans l'eau, pour 4 angles de diffusion ;
[Fig. 3B] représente un schéma expérimental illustrant 4 corrélogrammes d'une composante polarisée VH d'un faisceau diffusé par le même échantillon que celui utilisé pour la Fig. 3A, et pour mêmes angles de diffusion ;
[Fig. 3C] représente un schéma expérimental illustrant 2 corrélogrammes respectivement d'une composante polarisée VV et d'une composante polarisée VH d'un faisceau diffusé par le même échantillon que celui utilisé pour la Fig. 3A, pour un angle de diffusion de 35°, et des ajustements des courbes expérimentales;
[Fig. 3D] représente un schéma expérimental illustrant respectivement la somme et la soustraction des 2 corrélogrammes illustrés sur la Fig. 3C et des ajustements des courbes ainsi calculées ;
[Fig. 4] représente les valeurs du taux de relaxation translationnelle ($\Gamma_t$) et de la somme des taux de relaxation ($\Gamma_t + \Gamma_r$) en fonction du carré du vecteur de diffusion ($q^2$), déterminées à partir des corrélogrammes pour chaque angle ; une approximation linéaire de ces courbes permet de retrouver graphiquement les valeurs moyennes du coefficient de diffusion translationnelle $D_t$ (pente) et du coefficient de diffusion rotationnelle $D_r$ (ordonnée à l'origine).

**Description détaillée de l'invention**

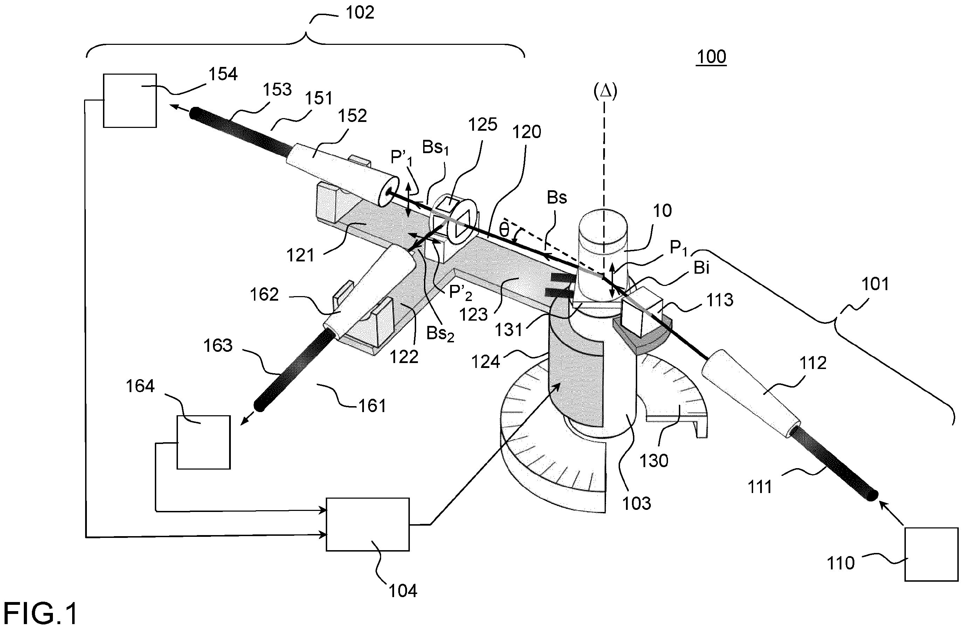

La Fig. 1 représente un schéma d'un dispositif 100 de détermination de paramètres caractéristiques des dimensions de nanoparticules, selon un exemple de réalisation. Le dispositif comprend des moyens d'émission lumineuse 101 configurée pour émettre un faisceau lumineux incident $B_i$ polarisé linéairement selon un axe de polarisation $P_1$.

Les moyens d'émission lumineuse 101 comprend par exemple une source laser fibrée 111 de longueur d'onde donnée, connectée à un collimateur optique 112 et un polariseur 113 (facultatif).

Le dispositif 100 comprend par ailleurs une unité de détection 102, avec notamment un bras de mesure 120 mobile en rotation autour d'un axe de rotation $\Delta$, un support d'échantillon fixe 103 et une unité de contrôle 104.

Le support d'échantillon 103 est configuré pour recevoir un contenant 10 à symétrie cylindrique, transparent, à l'intérieur duquel se trouve un échantillon desdites nanoparticules en suspension. Il est agencé de telle sorte qu'en opération, un axe de symétrie du contenant soit confondu avec l'axe de rotation du bras de mesure.

En pratique, on pourra utiliser comme contenant tout flacon transparent optiquement de géométrie cylindrique adapté pour recevoir une suspension de nano-objets claire (non opaque), homogène, et suffisamment diluée pour que le signal diffusé ne soit pas trop puissant et n'altère pas le régime de diffusion. On évitera toute agitation durant la mesure. Le support d'échantillon comprend par exemple un socle (de diamètre pouvant être adapté au flacon utilisé) maintenant le flacon de l'échantillon immobile par rapport à la rotation du bras, une chambre thermalisée permettant un contrôle précis de la température localement autour de l'échantillon. L'élément 130 (optionnel) représente un rapporteur circulaire, fixe, centré sur la platine de rotation motorisée 124, permettant la vérification directe de l'angle entre le bras de détection (*i.e.,* angle de diffusion) et la direction du faisceau laser incident. Le contrôle de l'angle de diffusion peut être fait depuis un interface logiciel de l'unité de contrôle. L'unité de détection 102 est configurée dans cet exemple pour la détection optique d'une pluralité de faisceaux diffusés selon respectivement une pluralité d'angles de diffusion $\theta$.

Plus précisément, l'unité de détection comprend un élément séparateur de polarisation 125 agencé sur le bras de mesure 120 et configuré pour envoyer simultanément sur une première voie de détection 151 et une deuxième voie de détection 161 respectivement deux composantes polarisées $B_{S1}$, $B_{S2}$ d'un faisceau Bs diffusé par l'échantillon lorsqu'il est illuminé par le faisceau incident. Les deux voies de détection comprennent respectivement un premier axe optique et un deuxième axe optique.

L'élément séparateur de polarisation 125 comprend par exemple un biprisme séparateur de polarisation renvoyant le faisceau $BS_1$ de même polarisation que le faisceau incident dans la continuité du faisceau diffusé (première voie de détection) et le faisceau $BS_2$ de polarisation perpendiculaire à celle du faisceau incident dans une direction normale à celle du faisceau diffusé (deuxième voie de détection). Un dispositif (berceau-réceptacle) permettant d'ajuster la rotation et le centrage du cube afin d'optimiser au mieux la sélection de la polarisation dans la continuité et normale au faisceau diffusé

Ainsi, l'élément séparateur de polarisation permet de former sur chacune des voies de détection 151, 161, des composantes polarisées selon deux axes de polarisation perpendiculaires ($P'_1$, $P'_2$), dont un axe $P'_1$ colinéaire avec ledit axe $P_1$.

Dans l'exemple de la Fig. 1, l'unité de détection 102 est fibrée, et comprend, sur chaque voie de détection 151, 161, respectivement des collimateurs 152, 162, des fibres optiques monomodes à la longueur d'onde du laser 153 et 163 et des détecteurs 154 et 164, par exemple des unités de comptage de photons (APD) reliées aux fibres optiques.

En opération, l'unité de contrôle 104 reçoit les signaux émis par chacun des détecteurs 154, 164 et détermine, comme cela est décrit plus en détails ci-dessous, à partir des composantes polarisées détectés sur chacune des voies de détection au moins deux paramètres caractéristiques des dimensions des nanoparticules. Notamment, l'unité de contrôle détermine des signaux (par exemple des corrélogrammes) correspondant aux fluctuations d'intensité en fonction du temps des composantes polarisées du faisceau lumineux diffusé.

L'unité de contrôle permet également de piloter la platine motorisée qui permet d'ajuster l'angle de détection de la lumière diffusée.

Dans la suite de la description, on notera par souci de simplification VV le corrélogramme correspondant à la composante $B_{S1}$ du faisceau diffusé, polarisée avec un axe de polarisation $P'_1$ colinéaire avec l'axe de polarisation $P_1$ du faisceau polarisé incident $B_i$ et on notera VH le corrélogramme correspondant à la composante $B_{S2}$ du faisceau diffusé, polarisée avec un axe de polarisation $P'_2$ perpendiculaire avec l'axe de polarisation $P_1$ du faisceau polarisé incident $B_i$.

De façon générale, l'unité de contrôle 104 à laquelle il est fait référence dans la présente description peut comprendre une ou plusieurs entités physiques, par exemple un ou plusieurs ordinateurs. Lorsque dans la présente description, il est fait référence à des étapes de calcul ou traitement pour la mise en oeuvre notamment d'étapes de procédés, il est entendu que chaque étape de calcul ou traitement peut être mis en oeuvre par logiciel, hardware, firmware, microcode ou toute combinaison appropriée de ces technologies. Lorsqu'un logiciel est utilisé, chaque étape de calcul ou traitement peut être mise en oeuvre par des instructions de programme d'ordinateur ou du code logiciel. Ces instructions peuvent être stockées ou transmises vers un support de stockage lisible par l'unité de contrôle et/ou être exécutées par l'unité de contrôle afin de mettre en oeuvre ces étapes de calcul ou traitement.

Dans l'exemple de la Fig. 1, le bras de mesure 120 comprend trois branches dont une première branche 121 pour supporter les éléments de la première voie de mesure 151, notamment un collimateur/collecteur optique 152 connecté à une fibre monomode 153 et une deuxième branche 122 pour supporter les éléments de la deuxième voie de mesure 161, notamment un collimateur/collecteur optique 162 connecté à une fibre monomode 163. Il comprend par ailleurs une troisième branche 123 pour la connexion avec un cylindre tournant 124 autour de l'axe de rotation, dont la rotation est contrôlée par un moteur pas à pas piloté par l'unité de contrôle 104. Le bras de support est conçu de manière à être et rester planaire et rigide pour ainsi garantir l'alignement de tous les composants même durant la rotation. Des possibilités de fixation permettent de conserver ces éléments en place. Typiquement, en opération, on pourra ainsi procéder à un contrôle en rotation du bras de mesure de telle sorte à acquérir des composantes polarisées pour une pluralité de faisceaux diffusés correspondant à des anges de diffusion compris entre 20°et 160°, avec un incrément compris par exemple entre 5° et 45°.

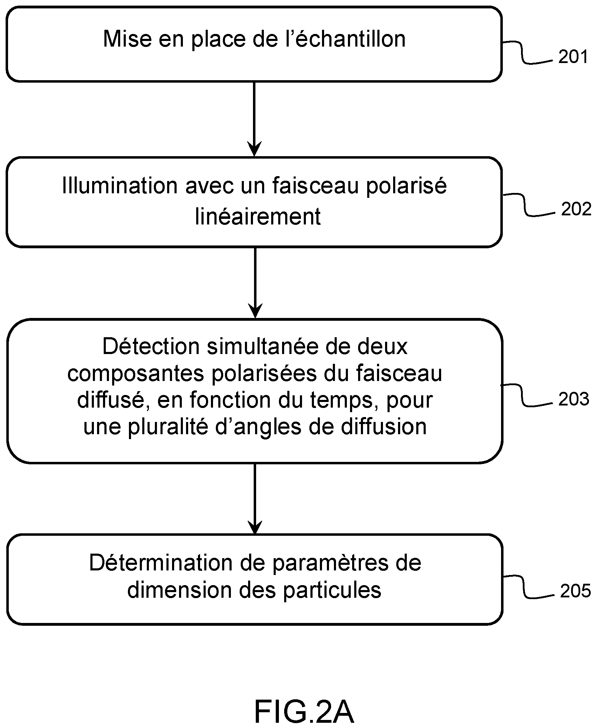

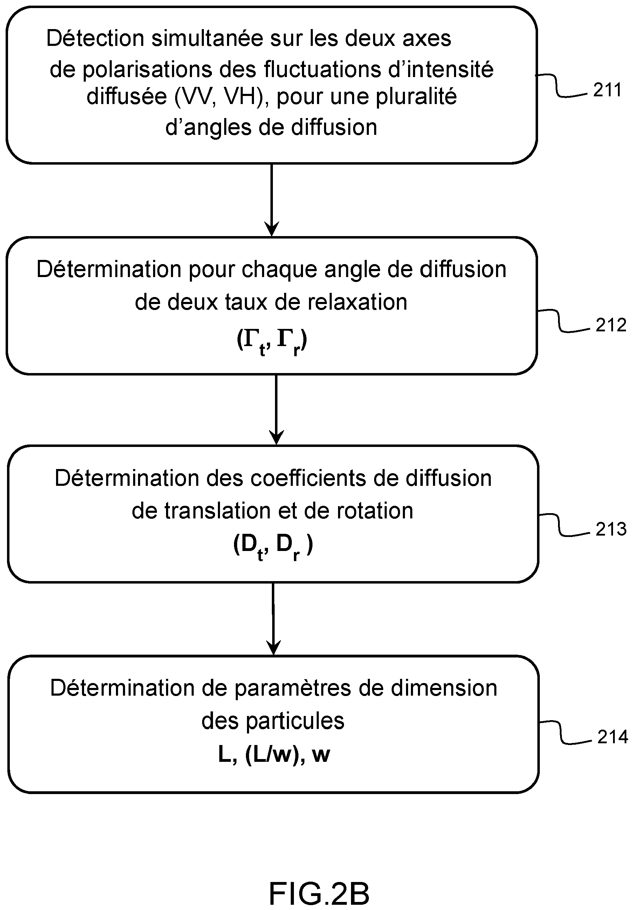

Les Fig. 2A et 2B représentent par des schémas synoptiques des exemples de procédé de détermination de paramètres caractéristiques des dimensions de nanoparticules, selon des exemples de réalisation.

Les procédés peuvent par exemple mis en oeuvre au moyen d'un dispositif tel que décrit sur la Fig. 1.

Le procédé décrit sur la Fig. 2 comprend ainsi l'agencement 201 de l'échantillon des nanoparticules en suspension dans le contenant 10 (Fig. 1), l'illumination 202 de l'échantillon au moyen du faisceau incident $B_i$ polarisé linéairement et la détection simultanée 203 des composantes polarisées $B_{S1}$, $B_{S2}$ du faisceau diffusé, au cours du temps, pour une pluralité d'angles de diffusion $\theta$.

L'angle de diffusion $\theta$ est défini comme l'angle formé dans un plan normal à l'axe de symétrie du contenant, entre la direction de propagation du faisceau incident $B_i$ et la direction dudit premier axe optique de ladite première voie de détection (direction de propagation du faisceau diffusé Bs).

A partir des signaux ainsi acquis, on détermine (étape 204) des paramètres caractéristiques des dimensions des nanoparticules. Les paramètres caractéristiques comprennent par exemple une longueur, une largeur, un rapport de forme des nanoparticules.

La Fig. 2B illustre plus en détails des étapes d'un exemple de procédé visant à déterminer les paramètres caractéristiques des dimensions des nanoparticules.

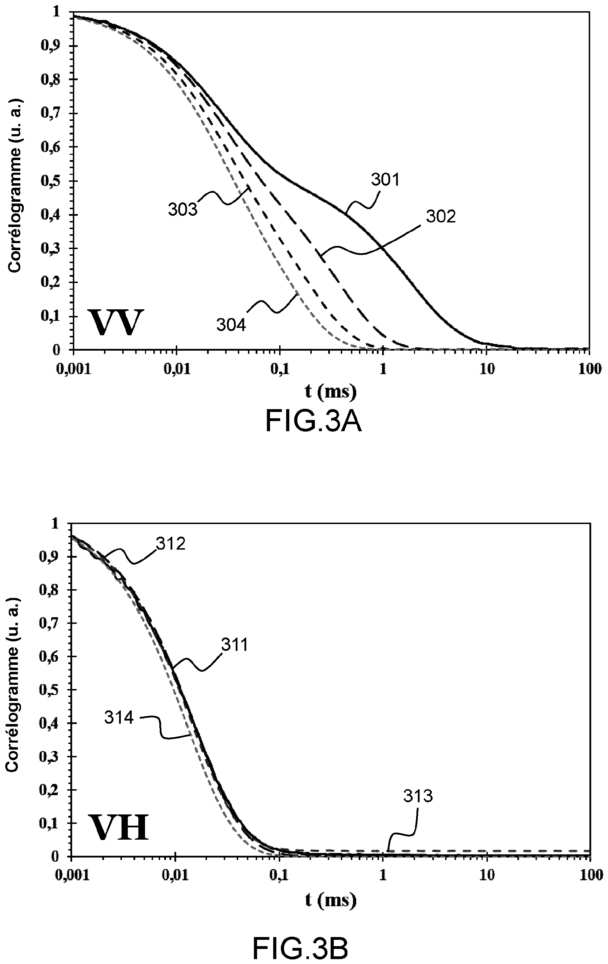

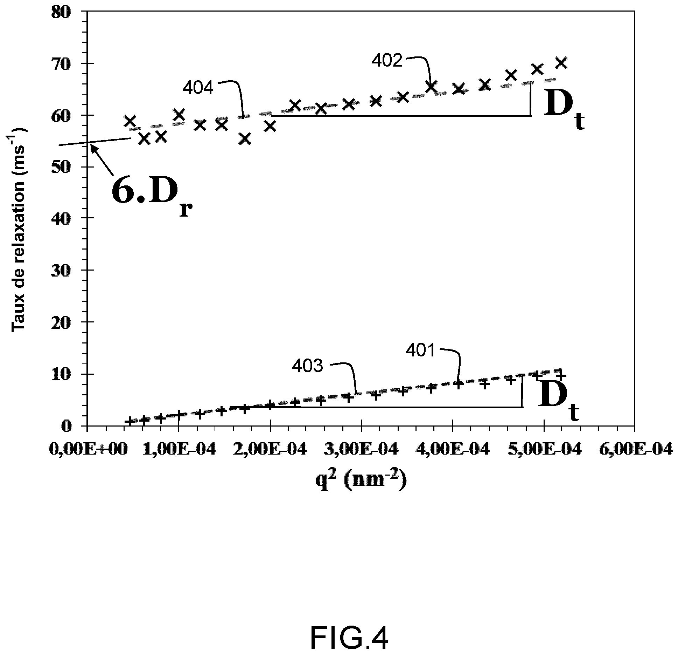

Les Figs 3A à 3D et 4 illustrent, par des courbes expérimentales, des étapes du procédé ainsi décrit.

Pour les Figs 3A à 3D et 4, les nanoparticules étudiées sont des nano-bâtonnets d'or en suspension dans l'eau. Le volume du contenant est de 5 mL et celui de l'échantillon de 2 à 3 mL.

Notamment, pour l'obtention des courbes expérimentales, un dispositif tel qu'illustré sur la Fig. 1 est utilisé. La source comprend un laser de longueur d'onde 635 nm, le bras de mesure est motorisé en rotation pour la détection de faisceaux diffusés à des angles compris entre 30° et 120° avec un incrément de 10°.

Le procédé comprend dans une première étape 211, et pour chaque angle de diffusion, la détermination de deux corrélogrammes des composantes VV, VH, c'est-à-dire des signaux correspondant aux fluctuations d'intensité des deux composantes polarisées $BS_1$, $BS_2$ en fonction du temps.

Les corrélogrammes sont déterminés par autocorrélation du signal avec lui-même. A titre d'illustration, la Fig. 3A illustre ainsi 4 corrélogrammes d'une composante polarisée d'un faisceau diffusé, selon le même axe de polarisation que le faisceau incident (VV), respectivement pour 4 angles de diffusion. Ainsi, les corrélogrammes 301, 302, 303, 304 correspondent respectivement à des angles de diffusion de 30°, 60°, 90°, 120°.

D la même manière, la Fig. 3B illustre 4 corrélogrammes d'une composante polarisée des mêmes faisceaux diffusés que sur la Fig. 3A, mais selon un axe de polarisation perpendiculaire à celui du faisceau incident (VH). Ainsi, les corrélogrammes 311, 312, 313, 314 correspondent respectivement aux angles de diffusion de 30°, 60°, 90°, 120°.

A noter que sur les Figs. 3A, 3B seuls 4 corrélogrammes ont été représentés pour faciliter la lecture mais en pratique, les mesures sont faites pour une dizaine d'angles de diffusion.

Comme cela est visible sur les Figs. 3A, 3B, on peut suivre l'évolution du signal en fonction de l'angle de détection. Alors que le corrélogramme mesuré en configuration VH reste inchangé (car la somme des taux de relaxation $\Gamma_t + \Gamma_r$ est dominée par $\Gamma_r$ qui est indépendante du vecteur de diffusion et donc de l'angle), le corrélogramme mesuré en configuration VV voit le second taux de relaxation (le translationnel, $\Gamma_t$) évoluer en fonction des différents angles de diffusion (car $\Gamma_t$ est proportionnel à $q^2$, carré du module du vecteur de diffusion, donc à l'angle), conformément à la théorie.

Le procédé comprend dans une deuxième étape 212, et pour chaque angle de diffusion, la détermination 212, à partir des corrélogrammes VV et VH, de deux taux de relaxation, un taux de relaxation translationnelle $\Gamma_t$ et un taux de relaxation rotationnelle $\Gamma_r$.

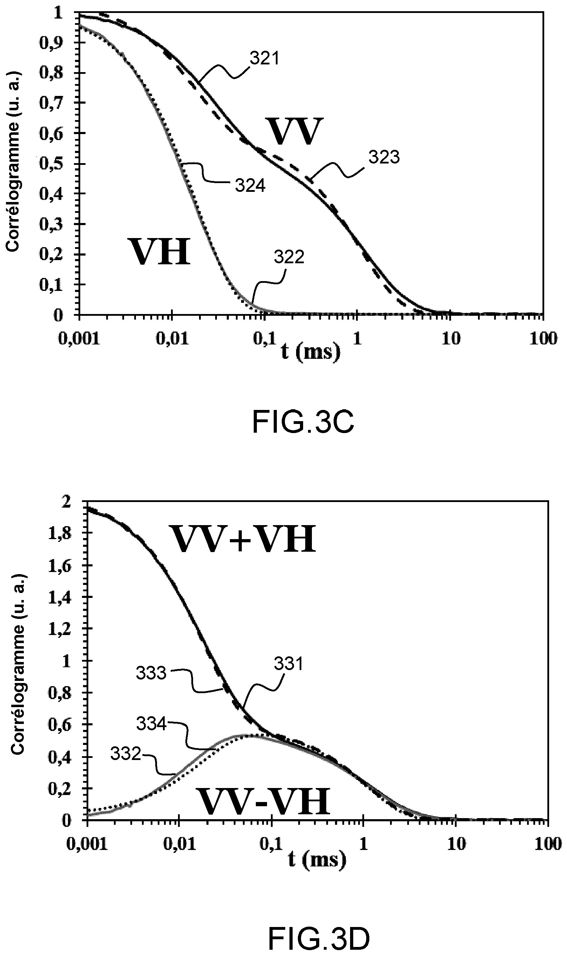

Pour ce faire, comme illustré sur la Fig. 3C, les corrélogrammes 321, 322, obtenus à un angle de diffusion donné (ici 35°) à partir des mesures en configuration VV et VH respectivement (ou les courbes correspondant à leur somme et soustraction) sont ajustés de façon connue par des fonctions exponentielles décroissantes et sommes d'exponentielles décroissantes (courbes 323, 324), utilisant la somme des taux de relaxation et le taux de relaxation translationnelle comme paramètres (voir [Réf. 1]). Ces taux de relaxations sont ensuite récupérés pour la suite de l'analyse.

Il est à noter que, comme illustré sur la Fig. 3D, les ajustements (courbes 333, 334) respectivement de la somme des corrélogrammes (VV+VH) (courbe 331) et de la soustraction (VV-VH) (courbe 332) permettent respectivement une meilleure précision sur la valeur de la somme des taux de relaxation ($\Gamma_t + \Gamma_r$) et sur le taux de relaxation translationnelle ($\Gamma_t$).

Le procédé comprend alors dans une étape 213, la détermination, à partir des deux taux de relaxation translationnelle et rotationnelle $\Gamma_t$, $\Gamma_r$ obtenues pour la pluralité d'angles de diffusion, de deux coefficients de diffusion translationnelle et rotationnelle $D_t$, $D_r$.

La détermination des coefficients de diffusion translationnelle et rotationnelle peut être faite selon deux méthodes à partir des taux de relaxation translationnelle et rotationnel.

Dans une première méthode, ces coefficients sont calculés pour chaque angle en utilisant les relations suivantes :

[Math 3]

$$D_t = \Gamma_t / q^2$$

$D_r = \Gamma_r / 6$ où q est le module du vecteur de diffusion défini par :

[Math 4]

$$q = \frac{4\pi n_0}{\lambda} \sin \theta / 2$$

avec $\lambda$ la longueur d'onde de la source laser, $n_0$ l'indice de réfraction optique de la phase continue (liquide) de la suspension, et $\theta$ l'angle de diffusion.

Dans une seconde méthode, une valeur générale de ces coefficients peut être déterminée graphiquement comme illustré sur la Fig. 4.

Pour cela, sont tracés le taux de relaxation translationnelle ($\Gamma_t$) (courbe 401, Fig. 4) et la somme des taux de relaxation ($\Gamma_t + \Gamma_r$) (courbe 402 , Fig. 4), en fonction de $q^2$.

Ces deux courbes peuvent être ajustées par des droites parallèles d'équations respectives :

[Math 5]

$$\Gamma_t = D_t \times q^2$$

$$\Gamma_t + \Gamma_r = D_t \times q^2 + 6D_r$$

Les valeurs des coefficients de diffusion peuvent donc être lues graphiquement, avec $D_t$, la pente (identique) des droites, mesurée préférentiellement sur la courbe de $\Gamma_t$ pour une meilleure précision ; et $D_r$, 1/6ème de l'ordonnée à l'origine de la courbe $\Gamma_t + \Gamma_r$.

A noter que l'exemple ainsi décrit utilise une autocorrélation temporelle du signal ; néanmoins, il est possible d'obtenir les coefficients de diffusion translationnelle et rotationnelle à partir d'une analyse spectrale du signal (FFT), à partir de la largeur d'un pic sur un spectre en fréquences obtenu par transformée de Fourier rapide du signal.

Finalement on détermine (étape 214), à partir desdits deux coefficients de diffusion translationnelle et rotationnelle ($D_t$, $D_r$), les paramètres caractéristiques des dimensions des nanoparticules.

La longueur des particules (L) et le rapport d'aspect (RF) sont déterminés en appliquant les relations suivantes :

[Math 6]

$$L = ( a \times Y^{4/3} ) / (b \times Y - c \times Y^{1/3} \times X ) / D_r^{1/3}$$

$$RF = L/\Phi = e \times \exp ( f \times Y^{-2/3} \times X )$$

où X est le ratio du coefficient de diffusion translationnelle par la racine cubique du coefficient de diffusion rotationnelle et Y est le ratio de la température absolue (en Kelvin) par la viscosité du liquide porteur (en millipascal par seconde ou en centiPoise), et a, b, c, e et f sont des constantes indépendantes de l'échantillon et des conditions expérimentales (e.g. la température) dont les valeurs sont les suivantes :

[math 7]

$$a = 1.29714 \times 10^{-32}$$

$$b = 1.33796 \times 10^{-24}$$

$$c = 6.69743 \times 10^{-9}$$

$$e = 3.35889 \times 10^{-2}$$

$$f = 4.12937 \times 10^{16}$$

En particulier, la variable $X = D_t / (\sqrt[3]{D_r})$ est directement liée aux valeurs des coefficients de diffusion précédemment calculées.

Les déposants ont ainsi montré expérimentalement la précision des résultats obtenus grâce aux dispositifs et procédé selon la présente description.

[Table 1]

| Angle (°) | $R_F = L/\Phi$ | Longueur L (nm) | Diamètre $\Phi$ (nm) | Erreur (par rapport aux images MET) |
|---|---|---|---|---|
| 55 | 2,66 | 29,29 | 11,03 | 10% |
| 60 | 1,68 | 26,19 | 15,60 | >20% |
| 65 | 2,95 | 29,88 | 10,11 | 5% |
| 70 | 3,90 | 32,12 | 8,23 | 20% |
| 75 | 4,03 | 32,31 | 8,02 | 20% |
| Valeur moyenne | 3.0 | 30.0 | 10.6 | 13.75% |
| Déviation standard | 1.0 | 2.5 | 3.1 | 8.9% |
| Méthode graphique multi-angles (Fig 4) | 2,6 | 29,5 | 11,25 | 10% |
| Microscopie Electronique (MET) | 3 | 31 | 10 | |

Le tableau ci-dessus montre que la méthode d'analyse mise au point dans l'invention au moyen du dispositif tel que décrit selon la présente description, permet de déterminer (sur cet exemple de nano bâtonnets d'or), les deux dimensions de longueur et de diamètre (ou leur rapport) avec une erreur minimale de 5% par rapport aux valeurs mesurées sur des images de microscopie électronique à transmission du même échantillon. Il apparaît aussi un angle optimal pour maximiser la précision de la mesure, ici égal à 65°.

Bien que décrits à travers un certain nombre d'exemples de réalisation, les dispositifs et procédés comprennent différentes variantes, modifications et perfectionnements qui apparaîtront de façon évidente à l'homme de l'art, étant entendu que ces différentes variantes, modifications et perfectionnements font partie de la portée de l'invention telle que définie par les revendications qui suivent.

**Références**

Réf. 1. : US8,854,621.

Réf. 2. : J. Rodríguez-Fernández et al. « Dynamic Light Scattering of Short Au Rods with Low Aspects Ratio", J. Phys. Chem. C 2007, 111, 5020 - 5025

Réf. 3. : A. D. Levin et al. « Nonspherical nanoparticles characterization using partially depolarized dynamic light scattering", Proceedings of SPIE/IS & T, vol. 9526, 21 juin 2015, pages 95260P-1 à 95260P-8

Réf. 4 : T. Ohsawa et al. (1983) "FFT method of dynamic light scattering for particle size diagnostics in luminous flames", Combustion and Flame, 53(1-3), 135-139.

**Revendications**

1. Dispositif (100) de détermination de paramètres caractéristiques des dimensions de nanoparticules en suspension dans un milieu liquide, comprenant :

   - des moyens d'émission lumineuse (101) configurée pour émettre un faisceau lumineux incident ($B_i$) polarisé linéairement selon un axe de polarisation ($P_1$);
   - une unité de détection (102) comprenant un bras de mesure (120) mobile en rotation autour d'un axe de rotation ($\Delta$), ladite unité de détection étant configurée pour la détection optique d'une pluralité de faisceaux ($B_S$) diffusés par l'échantillon selon une pluralité d'angles de diffusion ($\theta$), lorsqu'il est illuminé par le faisceau incident, et comprenant une première voie de détection (151) avec un premier axe optique et une deuxième voie de détection (161) avec un deuxième axe optique, les première et deuxième voies de détection étant séparées par un élément séparateur de polarisation (125) agencé sur ledit bras de mesure;
   - un support d'échantillon fixe (103), configuré pour recevoir un contenant (10) à symétrie cylindrique, à l'intérieur duquel se trouve un échantillon desdites nanoparticules en suspension, le support d'échantillon (103) étant agencé de telle sorte qu'en opération, un axe de symétrie du contenant soit confondu avec l'axe de rotation du bras de mesure;

- une unité de contrôle (104) ;

et dans lequel :

- l'élément séparateur de polarisation (125) du bras de mesure est configuré pour envoyer simultanément, pour chaque angle de diffusion de ladite pluralité d'angles de diffusion :

- sur la première voie de détection, une première composante polarisée ($B_{S1}$) du faisceau ($B_S$) diffusé par l'échantillon audit angle de diffusion, ladite première composante étant polarisée linéairement avec un axe de polarisation ($P'_1$) colinéaire avec ledit axe ($P_1$) de polarisation du faisceau incident ;
- sur la deuxième voie de détection, une deuxième composante polarisée ($B_{S2}$) du faisceau ($B_S$) diffusé par l'échantillon audit angle de diffusion, ladite deuxième composante étant polarisée linéairement avec un axe de polarisation ($P'_2$) perpendiculaire à l'axe ($P_1$) de polarisation du faisceau incident ;
- l'unité de contrôle (104) est configurée pour déterminer, à partir de signaux correspondant aux composantes polarisées détectées sur chacune des voies de détection, en fonction du temps, et pour la pluralité des angles de diffusion, au moins deux paramètres caractéristiques des dimensions des nanoparticules.

2. Dispositif selon la revendication 1, dans lequel la pluralité d'angles de diffusion est comprise dans une plage d'angles de diffusion allant de 20° à 160°.

3. Dispositif selon l'une quelconque des revendications précédentes, dans lequel ledit bras de mesure est automatisé en rotation, contrôlé par ladite unité de contrôle.

4. Dispositif selon l'une quelconque des revendications précédentes, dans lesquelles lesdites voies de détection sont fibrées.

5. Procédé de détermination de paramètres caractéristiques des dimensions de nanoparticules anisotropes en suspension dans un milieu liquide, comprenant :

- l'agencement (201) d'un échantillon desdites nanoparticules en suspension dans un contenant (10) à symétrie cylindrique;
- l'illumination (202) dudit échantillon au moyen d'un faisceau lumineux incident ($B_i$) polarisé linéairement selon un axe de polarisation ($P_1$);
- la détection simultanée (203), au moyen d'un bras de mesure (120) mobile en rotation autour d'un axe de rotation ($\Delta$) confondu avec un axe de symétrie du contenant (10), pour chaque angle de diffusion d'une pluralité d'angles de diffusion ($\theta$), de deux composantes polarisées ($B_{S1}$, $B_{S2}$) du faisceau diffusé par l'échantillon audit angle de diffusion, les deux composantes polarisées présentant respectivement deux axes de polarisation ($P'_1$, $P'_2$) perpendiculaires, un desdits axes de polarisation étant colinéaire avec ledit axe de polarisation du faisceau incident ;
- la détermination (204), à partir de signaux correspondant aux composantes polarisées détectées en fonction du temps, pour la pluralité des angles de diffusion, d'au moins deux paramètres caractéristiques des dimensions des nanoparticules.

6. Procédé selon la revendication 5, dans lequel lesdits paramètres caractéristiques des dimensions des nanoparticules comprennent au moins deux paramètres parmi : une longueur, une largeur, un rapport de forme, un diamètre, une hauteur, une épaisseur, une longueur de grand axe, une longueur de petit axe.

7. Procédé selon l'une quelconque des revendications 5 ou 6, dans lequel la pluralité d'angles de diffusion est comprise dans une plage d'angles de diffusion allant de 20° à 160°.

8. Procédé selon l'une quelconque des revendications 5 à 7, dans lequel la détermination d'au moins deux paramètres caractéristiques des dimensions des nano-objets comprend la détermination de deux coefficients de diffusion translationnelle et rotationnelle ($D_t$, $D_r$).

9. Procédé selon la revendication 8, dans lequel la détermination des deux coefficients de diffusion translationnelle et

rotationnelle ($D_t$, $D_r$) comprend, pour chaque angle de diffusion, la détermination de deux taux de relaxation translationnelle et rotationnelle ($\Gamma t$, $\Gamma r$).

10. Procédé selon la revendication 9, dans lequel, la détermination de deux taux de relaxation translationnelle et rotationnelle ($\Gamma t$, $\Gamma r$) comprend, pour ledit angle de diffusion :

- la détermination (211) de deux corrélogrammes (VV, VH) correspondant aux fluctuations d'intensité desdites deux composantes polarisées en fonction du temps ;
- la détermination (212), à partir desdits corrélogrammes, desdits taux de relaxation translationnelle et rotationnelle ($\Gamma t$, $\Gamma r$).

11. Procédé selon la revendication 10, dans lequel la détermination des deux taux de relaxation translationnelle et rotationnelle ($\Gamma_t$, $\Gamma_r$) est obtenue à partir d'un ajustement de courbes résultant respectivement de la somme et de la soustraction des deux corrélogrammes.

12. Procédé selon la revendication 8, dans lequel la détermination desdits coefficients de diffusion translationnelle et rotationnelle ($D_t$, $D_r$) est déterminé graphiquement à partir de taux de relaxation translationnelle et rotationnelle ($\Gamma t$, $\Gamma r$) obtenus pour ladite pluralité d'angles de diffusion.

13. Procédé selon l'une quelconque des revendications 8 à 12, dans lequel la détermination desdits au moins deux paramètres caractéristiques des dimensions des nanoparticules comprend la détermination d'une longueur et d'un rapport de forme desdites nanoparticules calculés par une loi empirique, ladite loi empirique étant fonction d'une variable égale au ratio du coefficient de diffusion translationnelle par la racine cubique du coefficient de diffusion rotationnelle.

**Patentansprüche**

1. Vorrichtung (100) zur Bestimmung von charakteristischen Parametern der Abmessungen von Nanopartikeln, die in einem flüssigen Medium suspendiert sind, aufweisend:

- Lichtemissionsmittel (101), die so konfiguriert sind, dass sie einen einfallenden Lichtstrahl ($B_i$) aussenden, der linear entlang einer Polarisationsachse ($P_1$) polarisiert ist;
- eine Detektionseinheit (102) mit einem Messarm (120), der um eine Drehachse ($\Delta$) drehbar ist, wobei die Detektionseinheit für die optische Erfassung einer Vielzahl von Strahlen ($B_S$) konfiguriert ist, die von der Probe gemäß einer Vielzahl von Streuwinkeln ($\theta$) gestreut werden, wenn sie von dem einfallenden Strahl beleuchtet wird, und einen ersten Detektionsweg (151) mit einer ersten optischen Achse und einen zweiten Detektionsweg (161) mit einer zweiten optischen Achse aufweist, wobei der erste und der zweite Detektionsweg durch ein Polarisationsseparatorelement (125) getrennt sind, das an dem Messarm angeordnet ist;
- einen festen Probenhalter (103), der so konfiguriert ist, dass er einen zylindersymmetrischen Behälter (10) aufnimmt, in dem sich eine Probe der suspendierten Nanopartikel befindet, wobei der Probenhalter (103) so angeordnet ist, dass im Betrieb eine Symmetrieachse des Behälters mit der Drehachse des Messarms zusammenfällt;
- eine Steuereinheit (104);

und wobei:

- das Polarisationsseparatorelement (125) des Messarms so konfiguriert ist, dass es für jeden Streuwinkel aus der Vielzahl von Streuwinkeln gleichzeitig:

- auf dem ersten Detektionsweg eine erste polarisierte Komponente ($B_{S1}$) des Strahls ($B_S$), der von der Probe bei dem Streuwinkel gestreut wird, wobei die erste Komponente linear polarisiert ist mit einer Polarisationsachse ($P'_1$), die kollinear mit der Polarisationsachse ($P_1$) des einfallenden Strahls ist;
- auf dem zweiten Detektionsweg eine zweite polarisierte Komponente ($B_{S2}$) des Strahls ($B_S$), der von der Probe bei dem Streuwinkel gestreut wird, wobei die zweite Komponente linear mit einer Polarisationsachse ($P'_2$) polarisiert ist, die senkrecht zu der Polarisationsachse ($P_1$) des einfallenden Strahls verläuft;
- die Steuereinheit (104) so konfiguriert ist, dass sie aus Signalen, die den polarisierten Komponenten entsprechen, die auf jedem der Detektionswege erfasst wurden, als Funktion der Zeit und für die Vielzahl der Streuwinkel mindestens zwei Parameter bestimmt, die für die Abmessungen der Nanopartikel charakteristisch sind.

2. Vorrichtung nach Anspruch 1, wobei die Mehrzahl von Streuwinkeln in einem Streuwinkelbereich von 20° bis 160° liegt.

3. Vorrichtung nach einem der vorhergehenden Ansprüche, wobei der Messarm automatisiert rotiert und von der Steuereinheit gesteuert wird.

4. Vorrichtung nach einem der vorhergehenden Ansprüche, wobei die Detektionsweg fibriert sind.

5. Verfahren zur Bestimmung von charakteristischen Parametern der Abmessungen von anisotropen Nanopartikeln, die in einem flüssigen Medium suspendiert sind, aufweisend:

   - Anordnen (201) einer Probe der genannten suspendierten Nanopartikel in einem Behälter (10) mit zylindrischer Symmetrie;
   - Beleuchten (202) der Probe mit einem einfallenden Lichtstrahl (Bi), der entlang einer Polarisationsachse (P1) linear polarisiert ist;
   - die gleichzeitige Erfassung (203), mittels eines Messarms (120), der um eine Drehachse ($\Delta$) drehbar ist, die mit einer Symmetrieachse des Behälters (10) zusammenfällt, für jeden Streuwinkel aus einer Vielzahl von Streuwinkeln ($\theta$), von zwei polarisierten Komponenten (BS1, BS2) des von der Probe bei dem Streuwinkel gestreuten Strahls, wobei die beiden polarisierten Komponenten jeweils zwei senkrecht zueinander stehende Polarisationsachsen (P'1, P'2) aufweisen, wobei eine der Polarisationsachsen mit der Polarisationsachse des einfallenden Strahls kollinear ist;
   - Bestimmen (204) von mindestens zwei Parametern, die für die Abmessungen der Nanopartikel charakteristisch sind, aus Signalen, die den als Funktion der Zeit erfassten polarisierten Komponenten entsprechen, für die Mehrzahl der Streuwinkel.

6. Verfahren nach Anspruch 5, wobei die charakteristischen Parameter der Abmessungen der Nanopartikel mindestens zwei Parameter aufweisen aus: einer Länge, einer Breite, einem Seitenverhältnis, einem Durchmesser, einer Höhe, einer Dicke, einer Hauptachsenlänge, einer Nebenachsenlänge.

7. Verfahren nach einem der Ansprüche 5 oder 6, wobei die Vielzahl von Streuwinkeln in einem Streuwinkelbereich von 20° bis 160° liegt.

8. Verfahren nach einem der Ansprüche 5 bis 7, wobei die Bestimmung von mindestens zwei Parametern, die für die Abmessungen der Nanopartikel charakteristisch sind, die Bestimmung von zwei Koeffizienten für die translationale und die rotatorische Streuung ($D_t$, $D_r$) aufweist.

9. Verfahren nach Anspruch 8, wobei die Bestimmung der beiden translationalen und rotatorischen Streukoeffizienten ($D_t$, $D_r$) für jeden Streuwinkel die Bestimmung von zwei translationalen und rotatorischen Relaxationsraten ($\Gamma t$, $\Gamma r$) aufweist.

10. Verfahren nach Anspruch 9, wobei die Bestimmung von zwei translationalen und rotatorischen Relaxationsraten ($\Gamma t$, $\Gamma r$) für den Streuwinkel Folgendes aufweist:

    - die Bestimmung (211) von zwei Korrelogrammen (VV, VH), die den Intensitätsschwankungen der beiden polarisierten Komponenten als Funktion der Zeit entsprechen;
    - die Bestimmung (212), aus den Korrelogrammen, der translationalen und der rotatorischen Relaxationsrate ($\Gamma t$, $\Gamma r$).

11. Verfahren nach Anspruch 10, wobei die Bestimmung der beiden translationalen und rotatorischen Relaxationsraten ($\Gamma t$, $\Gamma r$) aus einer Anpassung von Kurven erhalten wird, die sich jeweils aus der Summe und der Subtraktion der beiden Korrelogramme ergeben.

12. Verfahren nach Anspruch 8, wobei die Bestimmung der translationalen und rotatorischen Diffusionskoeffizienten ($D_t$, $D_r$) grafisch aus den translationalen und rotatorischen Relaxationsraten ($\Gamma t$, $\Gamma r$) bestimmt wird, die für die Vielzahl von Streuwinkeln erhalten werden.

13. Verfahren nach einem der Ansprüche 8 bis 12, wobei die Bestimmung der mindestens zwei Parameter, die für die Abmessungen der Nanopartikel charakteristisch sind, die Bestimmung einer Länge und eines Seitenverhältnisses der Nanopartikel aufweist, die durch ein empirisches Gesetz berechnet werden, wobei das empirische Gesetz eine Funktion einer Variablen ist, die gleich dem Verhältnis des translationalen Streukoeffizienten zur kubischen Wurzel des rotatorischen Streukoeffizienten ist.

**Claims**

1. A device (100) for determining characteristic parameters of the dimensions of nanoparticles in suspension in a liquid medium, comprising:

   light-emitting means (101) configured to emit an incident light beam ($B_i$) that is linearly polarized along a polarization axis ($P_1$);
   a detecting unit (102) comprising a measurement arm (120) that is rotatable with respect to an axis of rotation ($\Delta$), wherein said detecting unit is configured for optical detection of a plurality of beams ($B_S$) scattered by the sample at a plurality of scattering angles ($\theta$), when it is illuminated by the incident beam, and comprising a first detection channel (151) with a first optical axis and a second detection channel (161) with a second optical axis, the first and second detection channels being separated by a polarization-splitting element (125) arranged in said measurement arm;
   a fixed sample holder (103), configured to receive a container (10) of cylindrical symmetry, inside of which is located a sample of said nanoparticles in suspension, the sample holder (103) being arranged such that, in operation, an axis of symmetry of the container is coincident with the axis of rotation of the measurement arm;
   a control unit (104); wherein:

   the polarization-splitting element (125) of the measurement arm is configured to simultaneously send, for each scattering angle of said plurality of scattering angles:

   in the first detection channel, a first polarized component ($B_{S1}$) of the beam ($B_S$) scattered by the sample at said scattering angle, said first component being linearly polarized with a polarization axis ($P'_1$) collinear with said polarization axis ($P_1$) of the incident beam;
   in the second detection channel, a second polarized component ($B_{S2}$) of the beam (Bs) scattered by the sample at said scattering angle, said second component being linearly polarized with a polarization axis ($P'_2$) perpendicular to said polarization axis ($P_1$) of the incident beam; and

   the control unit (104) is configured to determine, from signals corresponding to the polarized components detected in each of the detection channels as a function of time, and for said plurality of scattering angles, at least two characteristic parameters of the dimensions of the nanoparticles.

2. The device according to claim 1, wherein the plurality of scattering angles is comprised in a range of scattering angles extending from 20° to 160°.

3. The device according to any of the preceding claims, wherein the rotation of said measurement arm is automated and controlled by said control unit.

4. The device according to any of the preceding claims, wherein said detection channels are optical fibered.

5. A method for determining characteristic parameters of the dimensions of anisotropic nanoparticles in suspension in a liquid medium, comprising:

   arranging (201) a sample of said nanoparticles in liquid suspension in a container (10) of cylindrical symmetry;
   illuminating (202) said sample by means of an incident light beam ($B_i$) that is linearly polarized along a polarization axis ($P_1$);
   simultaneously detecting (203), by means of a measurement arm (120) that is rotatable with respect to an axis of rotation ($\Delta$) that is coincident with an axis of symmetry of the container (10), and for each scattering angle of a plurality of scattering angles ($\theta$), two polarized components ($B_{S1}$, $B_{S2}$) of the beam scattered by the sample at said scattering angle, the two polarized components respectively having two polarization axes ($P'_1$, $P'_2$) that are perpendicular, one of said polarization axes being collinear with said polarization axis of the incident beam;

determining (204), from signals corresponding to the detected polarized components as a function of time, for said plurality of scattering angles, at least two characteristic parameters of the dimensions of the nanoparticles.

6. The method according to claim 5, wherein said characteristic parameters of the dimensions of the nanoparticles comprise at least two parameters among: a length, a width, an aspect ratio, a diameter, a height, a thickness, a major-axis length, a minor-axis length.

7. The method according to any of claims 5 or 6, wherein the plurality of scattering angles is comprised in a range of scattering angles extending from 20° to 160°.

8. The method according to any of claims 5 to 7, wherein the determination of at least two characteristic parameters of the dimensions of the nano-objects comprises determining two translational and rotational scattering coefficients $(D_t, D_r)$.

9. The method according to claim 8, wherein the determination of the two translational and rotational scattering coefficients $(D_t, D_r)$ comprises, for each scattering angle, determining two translational and rotational relaxation rates $(\Gamma_t, \Gamma_r)$.

10. The method according to claim 9, wherein the determination of two translational and rotational relaxation rates $(\Gamma_t, \Gamma_r)$ comprises, for said scattering angle:

   determining (211) two correlograms (VV, VH) corresponding to the fluctuations in the intensity of said two polarized components as a function of time;
   determining (212), from said correlograms, said translational and rotational relaxation rates ($\Gamma$t, Tr).

11. The method according to claim 10, wherein the two translational and rotational relaxation rates ($\Gamma$t, $\Gamma_r$) are determined from a fit of curves respectively resulting from the sum and subtraction of the two correlograms.

12. The method according to claim 8, wherein said translational and rotational scattering coefficients $(D_t, D_r)$ are determined graphically from translational and rotational relaxation rates $(\Gamma_t, \Gamma_r)$ obtained for said plurality of scattering angles.

13. The method according to any of claims 8 to 12, wherein the determination of said at least two characteristic parameters of the dimensions of the nanoparticles comprises determining a length and an aspect ratio of said nanoparticles, computed via an empirical law, said empirical law being dependent on a variable equal to the ratio of the translational scattering coefficient to the cube root of the rotational scattering coefficient.

FIG.1

EP 3 789 750 B1

```
┌─────────────────────────────────────────────┐
│        Mise en place de l'échantillon          │──⌐ 201
└─────────────────────────────────────────────┘
                      │
                      ▼
┌─────────────────────────────────────────────┐
│      Illumination avec un faisceau polarisé    │──⌐ 202
│                  linéairement                   │
└─────────────────────────────────────────────┘
                      │
                      ▼
┌─────────────────────────────────────────────┐
│        Détection simultanée de deux            │
│     composantes polarisées du faisceau         │──⌐ 203
│     diffusé, en fonction du temps, pour        │
│     une pluralité d'angles de diffusion        │
└─────────────────────────────────────────────┘
                      │
                      ▼
┌─────────────────────────────────────────────┐
│      Détermination de paramètres de            │──⌐ 205
│        dimension des particules                │
└─────────────────────────────────────────────┘
```

## FIG.2A

Détection simultanée sur les deux axes
de polarisations des fluctuations d'intensité
diffusée (VV, VH), pour une pluralité
d'angles de diffusion
— 211

Détermination pour chaque angle de diffusion
de deux taux de relaxation
$(\Gamma_t, \Gamma_r)$
— 212

Détermination des coefficients de diffusion
de translation et de rotation
$(D_t, D_r)$
— 213

Détermination de paramètres de dimension
des particules
L, (L/w), w
— 214

FIG.2B

FIG.3A

FIG.3B

FIG.3C

FIG.3D

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8854621 B

**Littérature non-brevet citée dans la description**

- **J. RODRÍGUEZ-FERNÁNDEZ et al.** Dynamic Light Scattering of Short Au Rods with Low Aspects Ratio. *J. Phys. Chem. C,* 2007, vol. 111, 5020-5025
- **A. D. LEVIN et al.** Nonspherical nanoparticles characterization using partially depolarized dynamic light scattering. *Proceedings of SPIE/IS & T,* 21 Juin 2015, vol. 9526, 95260, , 1, , 95260, , 8
- **T. OHSAWA et al.** FFT method of dynamic light scattering for particle size diagnostics in luminous flames. *Combustion and Flame,* 1983, vol. 53 (1-3), 135-139